# EUROPEAN PATENT SPECIFICATION

(11) **EP 3 272 615 B1**
(45) Date of publication and mention of the grant of the patent: **10.11.2021**
(21) Application number: 17181710.9
(22) Date of filing: 17.07.2017
(51) Int. Cl.: B61D 17/02

(54) **VEHICLE BODY STRUCTURE FOR A RAILROAD VEHICLE**
FAHRZEUGKAROSSERIESTRUKTUR FÜR EIN SCHIENENFAHRZEUG
STRUCTURE FRONTALE POUR UNE CARROSSERIE DE VÉHICULE

(30) Priority: 20.07.2016 JP 2016141986
(43) Date of publication of application: 24.01.2018
(73) Proprietor: Hitachi, Ltd., Chiyoda-ku, Tokyo 100-8280 (JP); East Japan Railway Company, Tokyo 151-8578 (JP)
(72) Inventor: MORITA, Kiyoshi, Chiyoda-ku, Tokyo 1008280 (JP); MATSUI, Akitoshi, Chiyoda-ku, Tokyo 1008280 (JP); YOSHIDA, Takashi, Chiyoda-ku, Tokyo 1008280 (JP); CHOUNO, Takahiro, Chiyoda-ku, Tokyo 1008280 (JP); MASAKI, Takahiro, Chiyoda-ku, Tokyo 1008280 (JP); MOCHIDA, Toshihiko, Chiyoda-ku, Tokyo 1008280 (JP); ISHII, Huyutaka, Shibuya-ku, Tokyo 1518578 (JP); FUJII, Yoshihiro, Shibuya-ku, Tokyo 1518578 (JP)
(74) Representative: Mewburn Ellis LLP

(56) References cited:
- EP-A2- 2 106 983
- WO-A1-2014/202147
- DE-A1-102009 001 404
- JP-B2- 4 275 397

## Description

### BACKGROUND OF THE INVENTION

### Field of the Invention

The present invention relates to a vehicle body structure of a railroad vehicle that reduces fluid resistance.

### Description of the Related Art

For the purpose of reducing energy consumed by a railroad vehicle during traveling, it is necessary to reduce air resistance (fluid resistance) and resistance between wheels and rails (mechanical resistance) that are caused while the railroad vehicle travels. Because the fluid resistance increases in proportion to the second power of speed while the mechanical resistance increases in proportion to the first power of the speed, reduction of the fluid resistance is effective in reducing energy consumed by high-speed railroad vehicles. Recently, the high-speed railroad vehicles increasingly have smoother surfaces. For this reason, reduction of fluid resistance in a vacant space surrounding a truck that holds the wheels and an electric motor configured to drive the vehicle is required. The truck is mounted with many devices including, besides the electric motor, a gear device (gears) and various kinds of springs and dampers. Since all these devices are difficult to streamline for reduced fluid resistance, preventing a flow from striking the devices of the truck is conceivably effective in reducing the fluid resistance.

There are conventionally devised techniques aimed at appropriately controlling an air flow with respect to the devices of the truck. For example, a horizontally extending underfloor closing plate of a front underfloor part that is disclosed in JP 4614745 B2 noted below is mounted with, near its junction with an end closing plate, a dummy member projecting downward. This dummy member functions as a barrier for lowering speed or pressure of air that enters a vacant truck space having its front and rear defined by the end closing plate and another end closing plate, respectively in a high-speed railroad vehicle. In a structure of a high-speed railroad vehicle that is described in JP 4275397 B2, end closing plates that respectively define a front and a rear of a vacant truck space each include a vertical surface and an inclined surface with a junction between the vertical surface and the inclined surface being a stagnation point for vertical flow control.

EP2106983-A1 proposes a railway car having a chassis including a notch formed in a wall upstream of a bogie. The notch breaks up the continuity of a sharp edge formed at the corner between a lower surface and a lower edge of the upstream wall.

DE102009001404-A1 proposes a railway vehicle having a smoothly closed underbody adapted for high-speed travel and provided with a set of waves or recesses formed in underbody.

### SUMMARY OF THE INVENTION

However, there are cases where a projection directed vertically downward from a vehicle body, such as the one disclosed in JP 4614745 B2, is difficult to mount. This is because an underfloor part of the vehicle needs to be mounted with devices such as a main transformer or a main converter that converts power obtained from an overhead wire to a voltage and a frequency that are suitable for the device that drives the vehicle and an air conditioner that adjusts an interior of the vehicle to comfortable temperature and humidity, thus often causing the underfloor closing plate to be at a height above an upper rail surface that is lowered to fit a limit dimension of the vehicle. Moreover, although the joining of the vertical surface and the inclined surface for formation of each of the end closing plates that respectively define the front and the rear of the vacant truck space can straighten a flow at the rear in a traveling direction of the vehicle, the upstream end closing plate can possibly lead the flow into the truck.

An object of the present invention is to provide a structure that reduces fluid resistance by suppressing a flow into a vacant truck space from below a vehicle with an underfloor closing plate being maintained at a height above an upper rail surface that is lowered to fit a limit dimension of the vehicle.

To achieve the above object, a vehicle body structure for a railroad vehicle according to the present invention is provided by claim 1. Furthermore, a method according to claim 6 is provided.

According to the present invention, an air flow into a vacant truck space from below the vehicle can be suppressed, whereby fluid resistance can be reduced around the truck.

### BRIEF DESCRIPTION OF THE DRAWINGS

Fig. 1 is a side view illustrating a truck of a conventional railroad vehicle and its periphery;
Fig. 2 is a side view of the railroad vehicle, illustrating air flows around the truck of the vehicle;
Fig. 3 is a side view of a railroad vehicle according to a first embodiment;
Fig. 4 is a perspective view of an underside of the railroad vehicle according to the first embodiment;
Fig. 5 is a side view of an entire train of railroad vehicles according to the first embodiment;
Fig. 6 is a perspective view of an underside of a railroad vehicle according to a second embodiment;
Fig. 7 is a side view of a railroad vehicle according to a third embodiment; and
Figs. 8A and 8B are side views each illustrating an entire train of railroad vehicles according to the third embodiment.

### DESCRIPTION OF THE PREFERRED EMBODIMENTS

Embodiments of the present invention are hereinafter described in detail with reference to the accompanying drawings. However, the following embodiments are not restrictive of the present invention. Various modifications and applications within a technical concept of the present invention are also included in the scope of the present invention.

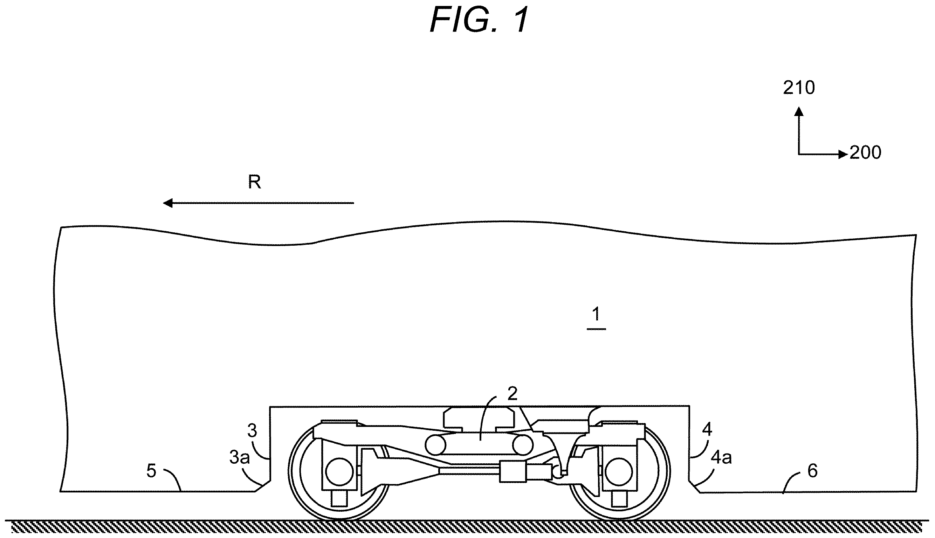

To begin with, referring to Fig. 1, a description is provided of a railroad vehicle, to which the present invention is applied, and a general structure of an end closing plate of the railroad vehicle. Railroad vehicles especially for conventional train lines and Shinkansen lines that are intended to transport passengers are each constructed of a vehicle body 1 having a space for the passengers and crew on board and trucks 2 supporting the vehicle body 1. Each of the railroad vehicles is provided with the two trucks. Fig. 1 shows a structure of a periphery of one of the trucks that is provided to the railroad vehicle.

The truck 2 has wheels that make contact with rails. As the wheels roll on the rails, the railroad vehicle travels along the rails. The truck 2 is present between the rails and the vehicle body 1 that are in vertical relation with a space between the truck 2 and the vehicle body 1 to ensure peripheral space for rotation of the wheels. The space surrounding the truck 2 is defined here as a vacant truck space.

Devices disposed under the vehicle in front of and behind the truck 2 are suspended from the vehicle body 1. There are cases where these devices are damaged in collision with flying objects during traveling, so that there are cases where several covers are mounted to cover the devices. In this description, those covers respectively disposed in front of and behind the truck 2 in a traveling direction are defined as end closing plates. When the vehicle travels in a direction of arrow R in Fig. 1, the end closing plate positioned on a left side of the vacant truck space is referred to as an upstream-end closing plate 3, while the end closing plate positioned on a right side of the vacant truck space is referred to as a downstream-end closing plate 4. The upstream-end closing plate 3 has an inclined part 3a at its lower end. Similarly, the downstream-end closing plate 4 has an inclined part 4a at its lower end. The end closing plates 3 (3a), 4 (4a) are provided along an entire vehicle width. For this reason, the vacant truck space can be called a space that has its front and back respectively defined by the upstream-end closing plate 3 and the downstream-end closing plate 4.

Those covers extending horizontally forward (or backward) from respective lower edges of the end closing plates 3, 4 are defined as underfloor closing plates. When the vehicle travels in the direction of arrow R in Fig. 1, the underfloor closing plate extending horizontally leftward from the lower edge of the upstream-end closing plate 3 is referred to as an upstream-underfloor closing plate 5, while the underfloor closing plate extending horizontally rightward from the lower edge of the downstream-end closing plate 4 is referred to as a downstream-underfloor closing plate 6. With these covers, devices of the truck 2 and the devices disposed under the vehicle can be protected from flying objects.

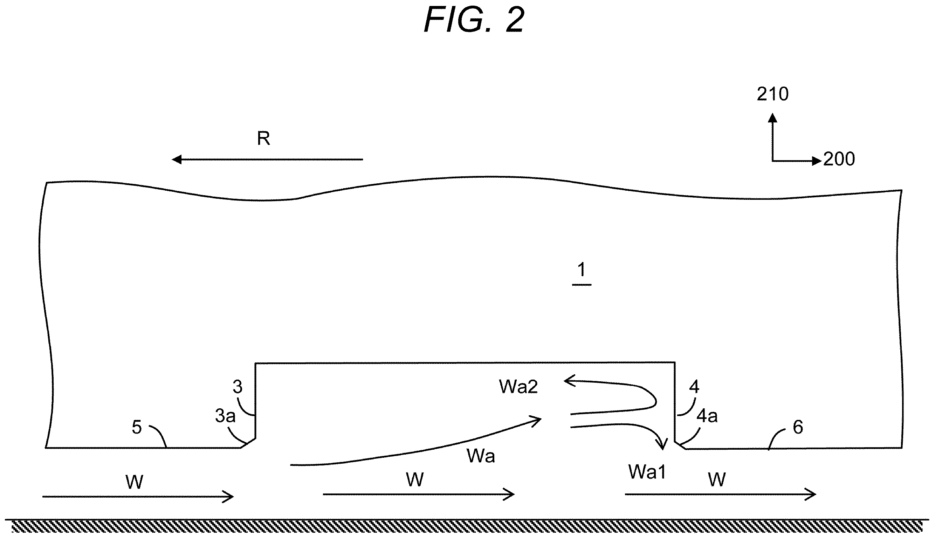

With reference to Fig. 2, a description is provided next of air flows around the vacant truck space and the end closing plates 3, 4 while the vehicle travels. Fig. 2 is a side view illustrating a periphery of the vacant truck space of one of the trucks with the truck 2 omitted to facilitate understanding of the air flows. When the vehicle travels in the direction of arrow R in Fig. 2, the main flow W viewed from outside the vehicle heads from a left side (upstream side) toward a right side (downstream side) in Fig. 2. This is when the partial flow Wa is directed into the vacant truck space, thus colliding against the downstream-end closing plate 4. By colliding against the downstream-end closing plate 4, the flow Wa splits into the flow Wa1 heading downwardly of the downstream-end closing plate 4 and the flow Wa2 heading upwardly of the downstream-end closing plate 4. The flow Wa1 heading downwardly of the downstream-end closing plate 4 joins the main flow W below a floor of the vehicle to head downstream. The flow Wa is a flow split from the main flow W and has a velocity close to that of the main flow W. By striking the devices of the truck 2, this flow Wa results in great fluid resistance.

In other words, the fluid resistance can conceivably be reduced if the flow into the vacant truck space can be suppressed. On the other hand, it is also necessary, in terms of ensuring of spaces for the devices disposed under the vehicle, to maintain each of the underfloor closing plates 5, 6 at a height above an upper rail surface that is lowered to fit a limit dimension of the vehicle. Respective structures of railroad vehicles according to the respective embodiments described below each suppress a flow into a vacant truck space with an underfloor closing plate being maintained at a height above an upper rail surface that is lowered to fit a limit dimension of the vehicle. Hereinafter, those embodiments are described concretely.

### First Embodiment

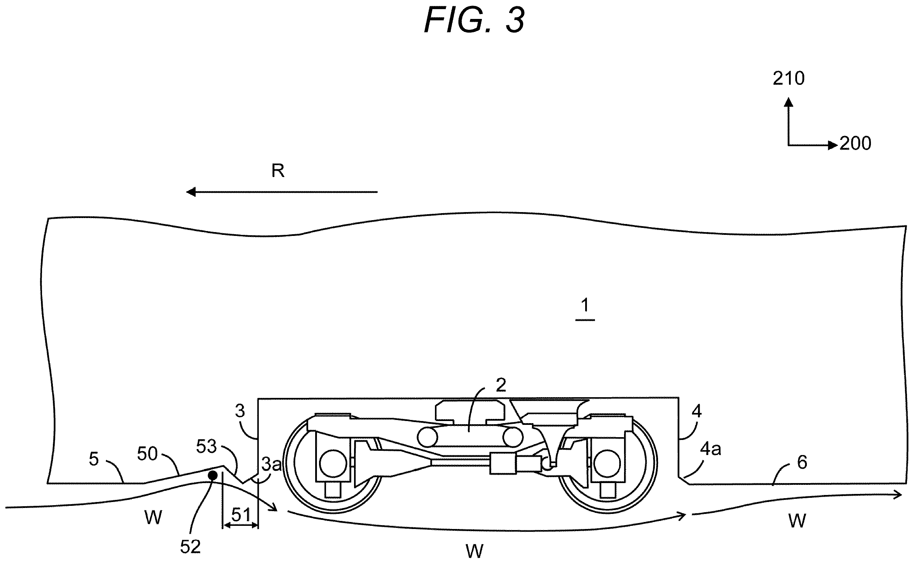

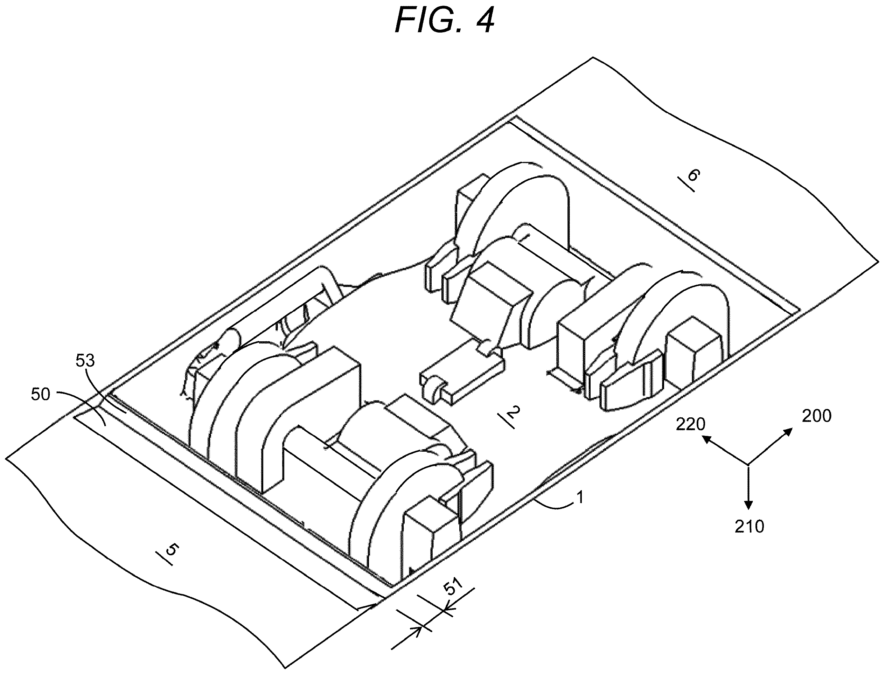

Fig. 3 is a side view of the railroad vehicle according to the first embodiment, and Fig. 4 is a perspective view of an underside of the railroad vehicle according to the first embodiment. Devices of a truck 2 are shown in simplified form in Fig. 4. As shown in Fig. 3, a downstream-end closing plate 4 and an upstream-end closing plate 3 are disposed to face each other across the truck 2 along a traveling direction 200 of the railroad vehicle of the first embodiment. An upstream-underfloor closing plate 5 includes a first inclined surface 50 that is inclined inwardly (upwardly or in a direction of arrow 210 in Fig. 3) of a vehicle body from the upstream-underfloor closing plate 5, and a second inclined surface 53 that connects with the first inclined surface 50 and is inclined outwardly (downwardly or opposite to the direction of arrow 210 in Fig. 3) of the vehicle body. The second inclined surface 53 of the upstream-underfloor closing plate 5 connects with an inclined part 3a (that is, a lower end of the upstream-end closing plate 3).

A projection 51 directed outwardly (downwardly) of the vehicle body toward a lower edge of the upstream-end closing plate 3 is formed of the second inclined surface 53 and the inclined part 3a, and a concavity 52 is formed of the first inclined surface 50 and the second inclined surface 53.

As shown in Fig. 4, the first inclined surface 50, the second inclined surface 53, and the inclined part 3a extend along a sideways direction (width direction) 220 of the vehicle. A lower edge of the downstream-end closing plate 4 is joined to a downstream-underfloor closing plate 6. Unlike the upstream-underfloor closing plate 5, the downstream-underfloor closing plate 6 is not provided with any concavity nor any projection.

With reference to Fig. 3, consideration is given to an air flow around a vacant truck space. When the vehicle travels in a direction of arrow R in Fig. 3, a main underfloor flow W viewed from outside the vehicle is led upward by the first inclined surface 50 and is thereafter deflected downward by the projection 51 formed of the second inclined surface 53 and the inclined part 3a. For this reason, the flow W is less likely to strike the truck 2, whereby fluid resistance is reduced in the vacant truck space. The flow W once turned downward results in an upward flow because of negative pressure in the vacant truck space and thus collides against the downstream-underfloor closing plate 6. However, due to the absence of a concavity and a projection, the flow is smooth, thus causing no fluid resistance.

It is to be noted that the drawing illustrates one example of the embodiment. With the structure shown in the present embodiment, a similar effect can be obtained even when changes are made to respective height dimensions of the concavity 52 and the projection 51. However, in order to ensure underfloor space of the vehicle, each of the underfloor closing plates 5, 6 is often at a height above an upper rail surface that is lowered to fit a limit dimension of the vehicle, so that it is desirable that a lower edge of the projection 51 (this lower edge can be regarded as a lower edge of the inclined part 3a) be set at a height above the upper rail surface that is the same as or greater than a height of a horizontal part (part without the projection 51 and the concavity 52) of the upstream-underfloor closing plate 5 above the upper rail surface.

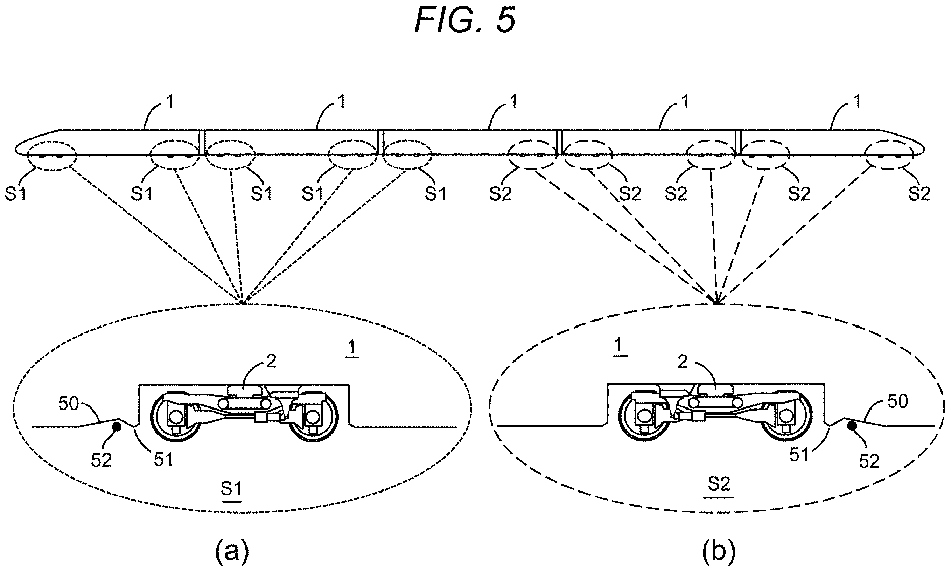

The railroad vehicle needs to be bidirectionally movable. Thus, location of the structure shown in Fig. 3 is described next with reference to Fig. 5 that is a side view of a train of a plurality of vehicles. It is to be noted that Fig. 5(a) is an enlarged view of a vacant truck space S1 and its neighborhood, while Fig. 5(b) is an enlarged view of a vacant truck space S2 and its neighborhood.

The main flow W below a floor of the vehicle has a higher wind velocity at a front in the traveling direction of the vehicle and a lower wind velocity at a rear in the traveling direction. Because the fluid resistance is in proportion to about the second power of speed, a greater fluid resistance reducing effect is achieved when the underfloor closing plate positioned at the front in the traveling direction of the vehicle is provided with the structure shown in Fig. 3. Accordingly, in the train of the plurality of vehicles, with a center of the train being a boundary in the traveling direction, it is desirable that based on a comparison between distances from one of the train's end vehicles (the lead vehicle or the last vehicle) that is nearer to each of the vacant truck spaces to the respective underfloor closing plates that are respectively positioned on a left and a right side of the vacant truck space (that is to say, in front of and behind the vacant truck space in the traveling direction), the underfloor closing plate that is nearer to the end vehicle nearer to the vacant truck space be provided with the concavity 52.

The train in Fig. 5, for example, is composed of the five railroad vehicles. The vacant truck spaces S1 provided in respective five positions of the vehicle bodies 1 of the train are nearer to the left end vehicle of the train, while the other vacant truck spaces S2 in respective five positions of the vehicle bodies 1 of the train are nearer to the right end vehicle of the train. As such, when such a train is composed, with regard to the underfloor closing plates respectively positioned on the left and right sides of the vacant truck space S1 (that is to say, in front of and behind the vacant truck space S1 in the traveling direction), the underfloor closing plate nearer to the left end vehicle (that is to say, the underfloor closing plate positioned on the left side of the vacant truck space S1) is provided with the concavity 52 as shown in Fig. 5(a). Moreover, with regard to the underfloor closing plates respectively positioned on the left and right sides of the vacant truck space S2 (that is to say, in front of and behind the vacant truck space S2 in the traveling direction), the underfloor closing plate nearer to the right end vehicle (that is to say, the underfloor closing plate positioned on the right side of the vacant truck space S2) is provided with the concavity 52 as shown in Fig. 5(b). With the underfloor closing plates 5, 6 and the respective lower edges of the projections 51 maintaining their lower-limit heightwise positions of a loading gauge, the above structure can make the flow W less likely to strike the trucks 2, whereby fluid resistance can be reduced in the vacant truck spaces S1, S2.

### Second Embodiment

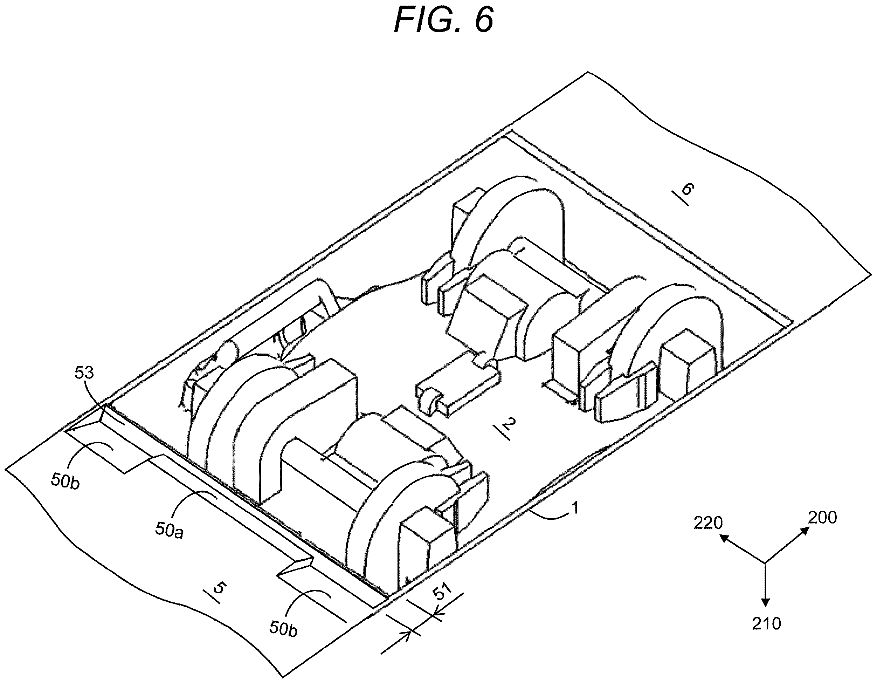

A description is provided next of the second embodiment. Fig. 6 is a perspective view of an underside of the railroad vehicle according to the second embodiment. The second embodiment differs from the first embodiment in that in the railroad vehicle according to the second embodiment, a first inclined surface 50 heading inwardly of a vehicle body from an upstream-underfloor closing plate 5 has its height dimension varied along a width direction 220 of the vehicle. Structurally, the railroad vehicle according to the second embodiment is otherwise similar to the railroad vehicle explained in the first embodiment.

In the railroad vehicle according to the second embodiment, as shown in Fig. 6, a concavity that is formed of a first inclined surface 50a in a center position along the width direction 220 of the vehicle body 1 (or along a railroad tie) and a second inclined surface 53 differs in height from concavities that are formed of respective first inclined surfaces 50b positioned at respective ends nearer to respective sides of the vehicle body 1 along the width direction 220 (or along the railroad tie) and the second inclined surface 53. Specifically, the first inclined surfaces 50b are each formed to have a greater height than the first inclined surface 50a. A concavity having its height dimension thus varied along the width direction 220 of the vehicle can suppress two-dimensional alignment of flows and make the flows less likely to strike the truck 2, whereby fluid resistance can be reduced in the vacant truck space.

In cases where the structure of the railroad vehicle according to the second embodiment is applied to a train of a plurality of vehicles, as in the case of the first embodiment, the underfloor closing plate that is on the vacant truck space's side nearer to the end vehicle of the train is provided with the concavity and a projection. In this way, while the underfloor closing plates 5, 6 and respective lower edges of the projections 51 maintain their lower-limit heightwise positions of a loading gauge, a further fluid resistance reducing effect is exerted with ease in the vacant truck spaces.

### Third Embodiment

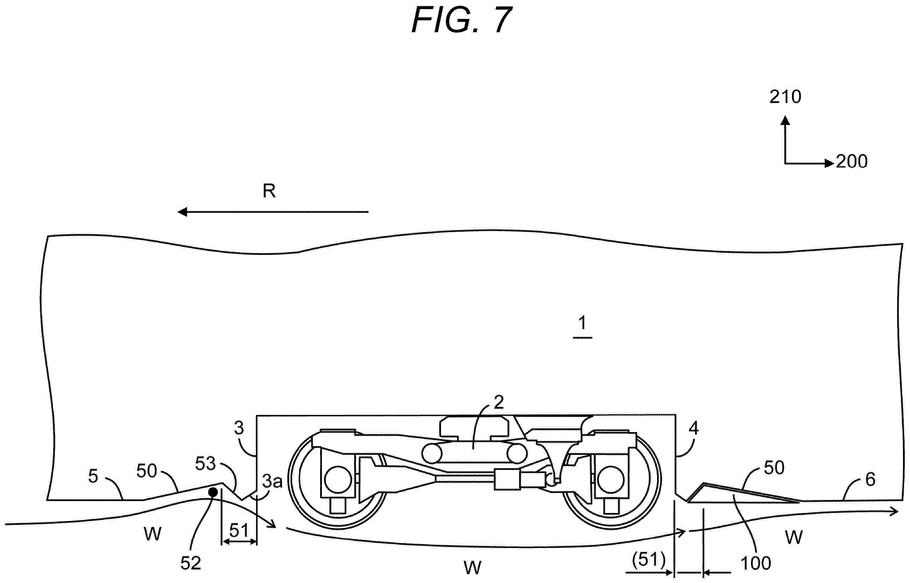

With reference to Fig. 7, a description is provided next of the structure of the railroad vehicle according to the third embodiment. Underfloor closing plates that are respectively in front of and behind a truck are each provided with a concavity 52 that is formed of a first inclined surface 50 and a second inclined surface 53 both heading inwardly of a vehicle body and a projection 51 directed outwardly of the vehicle body, (meaning that the upstream-underfloor closing plate and the downstream-underfloor closing plate are both provided with the concavities 52). However, the structure of the railroad vehicle according to the third embodiment is characterized by a closing member 100 that detachably closes one of the concavities 52, thereby facilitating change of closing location. It is to be noted that the concavities and the projections of the railroad vehicle according to the third embodiment may be structurally the same as those explained in the first embodiment or those explained in the second embodiment. Even with such a structure, a fluid resistance reducing effect can be obtained, as in the case of the railroad vehicle according to the first or second embodiment.

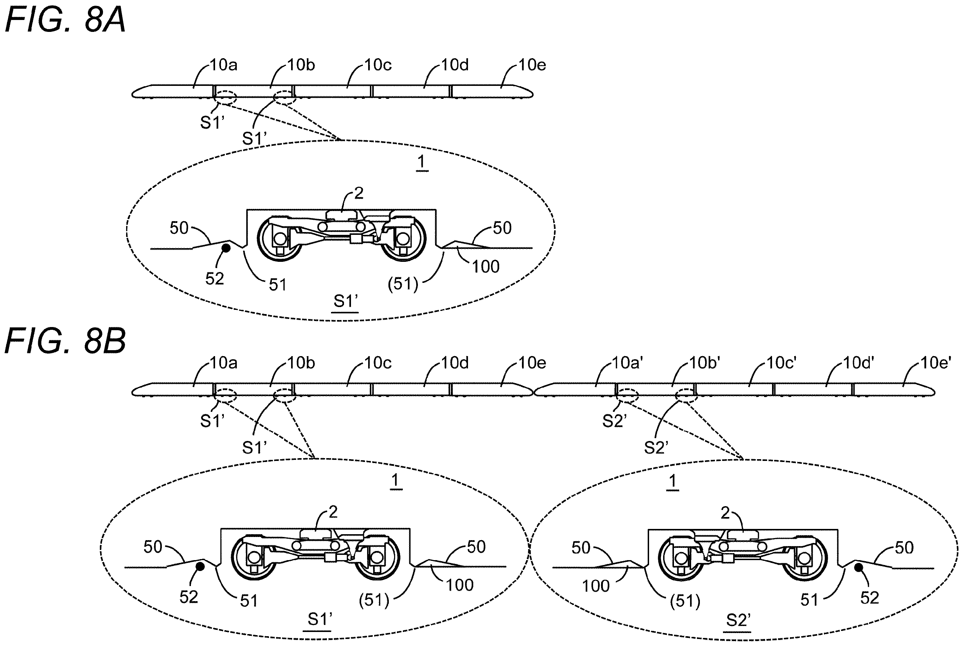

Moreover, even in cases where the truck at which fluid resistance reduction is intended has its location changed in a train, the railroad vehicle according to the third embodiment has such an effect that it is capable of an easy structural change for reduction of fluid resistance. This is explained with reference to Figs. 8A and 8B that are side views each illustrating an entire train of railroad vehicles according to the third embodiment. It is to be noted that S1' and S2' in Figs. 8A and 8B each denote a structure near a vacant truck space.

Fig. 8A shows the train composed of the railroad vehicles 10a, 10b, 10c, 10d, 10e. In such a single-composition train as shown in Fig. 8A, the second railroad vehicle 10b counted from the left end vehicle of the train, for example, has its end-vehicle-side underfloor closing plate (the left underfloor closing plate of S1' in the drawing that is nearer to the left end vehicle 10a in this case) that is provided with the concavity 52 (formed of the first and second inclined surfaces 50, 53 heading inwardly of the vehicle body) not mounted with the closing member 100. On the other hand, the underfloor closing plate farther from the end vehicle of the train (that is to say, the right underfloor closing plate of S1' in the drawing) is mounted with the closing member 100 to have a horizontal surface.

Generally, a train composed of a plurality of vehicles is often operated. However, there are cases where two trains are coupled together for operation for reasons of passenger requirements and others. Here, an assumption is made that there are two trains each being the one shown in Fig. 8A, and as shown in Fig. 8B, these two trains are coupled together while being oriented as they are. In other words, immediately after the coupling, the structures near the vacant truck spaces of the railroad vehicles 10a', 10b', 10c', 10d', 10e' of Fig. 8B are the same as those of the railroad vehicles 10a, 10b, 10c, 10d, 10e.

When attention is paid to, for example, the railroad vehicle 10b', similarly to the right underfloor closing plate of S1' in the drawing, the right underfloor closing plate of S2' in the drawing has the closing member 100 mounted thereon immediately after the coupling. However, the coupling of the two trains results in the vacant truck space of the railroad vehicle 10b' being nearer to the right end vehicle 10e' than the left end vehicle 10a. For this reason, it is desirable that the underfloor closing plates respectively positioned on a left and a right side of the vacant truck space of the railroad vehicle 10b' be structurally changed so that the concavity 52 is seen in the underfloor closing plate nearer to the right end vehicle 10e'. In the case of the railroad vehicle 10b', the underfloor closing plate positioned on the right side of the vacant truck space (that is to say, the right underfloor closing plate of S2') is nearer to the end vehicle (the right end vehicle 10e') of the train than the underfloor closing plate positioned on the left side is.

As such, the closing member 100 mounted to the right underfloor closing plate of S2' is removed therefrom for such a structural change that the concavity 52 is seen, while the underfloor closing plate (the left underfloor closing plate of S2') farther from the end vehicle of the train is mounted with the closing member 100 to have a horizontal surface. Using the closing member 100 in this way can provide, at each of the vacant truck spaces, the concavity in the underfloor closing plate that is nearer to the end vehicle of the train with a center of the train being a boundary in a traveling direction, as in the case of the train explained in the first embodiment. With the underfloor closing plates and respective lower edges of the projections 51 maintaining their lower-limit heightwise positions of a loading gauge, the above structure can make a flow less likely to strike the trucks 2, whereby fluid resistance can be reduced in the vacant truck spaces.

The description has been provided here of the method of structurally changing the underfloor closing plate when the trains are coupled together. However, the above-described method of structural change is effective even in other cases where the train has its composition changed by connection or disconnection of not less than one railroad vehicle to or from the train. In other words, with regard to the underfloor closing plate that has come nearer to an end of the train as a result of the connection or the disconnection of the railroad vehicle(s), the closing member 100 is removed therefrom, while the underfloor closing plate that has receded from the end of the train is mounted with the closing member 100 in a structural change.

## Claims

1. A vehicle body structure for a railroad vehicle (1), the vehicle body structure a first end closing plate (3) provided in front of a truck (2) in a traveling direction, a second end closing plate (4) provided behind the truck in the traveling direction, a first underfloor closing plate (5) extending horizontally forward in the traveling direction from a lower edge of the first end closing plate, and a second underfloor closing plate (6) extending horizontally opposite to the traveling direction from a lower edge of the second end closing plate,
wherein one of the first underfloor closing plate (5) and the second underfloor closing plate (6) is provided, at its junction with its corresponding end closing plate, with a downwardly directed projection (51) extending in a width direction of the vehicle (1), and on the opposite side of the downwardly directed projection to the end closing plate, an upwardly directed concavity (52) also extending in the width direction of the vehicle, the cavity being exposed to external vehicle airflow (W);
wherein said one of the first underfloor closing plate (5) and the second underfloor closing plate (6) includes a first inclined surface (50; 50a, 50b) and a second inclined surface (53) that form the concavity (52);
wherein the second inclined surface (53) and an inclined part (3a) at a lower end of the respective end closing plate (3) form the projection (51); and
wherein the other of the first underfloor closing plate (5) and the second underfloor closing plate (6) is free of a corresponding projection and a corresponding cavity exposed to external vehicle airflow (W).

2. The vehicle body structure according to claim 1, wherein the height of the concavity (52) varies along a width of the railroad vehicle.

3. A train comprising a plurality of railroad vehicles (1) each having a vehicle body structure according to claim 1 or 2, wherein in each of the plurality of railroad vehicles, the one of the first underfloor closing plate (5) and the second underfloor closing plate (6) that is nearer to the railroad vehicle positioned at an end of the train is provided with the concavity (52) and the projection (51), while the other of the first underfloor closing plate and the second underfloor closing plate that is farther from the railroad vehicle positioned at the end of the train is free of the concavity and the projection.

4. The vehicle body structure according to claim 1 or 2, wherein:
the other of the first underfloor closing plate (5) and the second underfloor closing plate (6) is provided, at its junction with its end closing plate (4), with a second downwardly directed projection (51) extending in a width direction of the vehicle, and on the opposite side of the downwardly directed projection to the end closing plate, a second upwardly directed concavity also extending in the width direction of the vehicle;
said other of the first underfloor closing plate (5) and the second underfloor closing plate (6) includes a first inclined surface (50) and a second inclined surface that form the second concavity;
the second inclined surface of said other of the first underfloor closing plate (5) and the second underfloor closing plate (6) and an inclined part at a lower end of the respective end closing plate (4) form the second projection (51); and
the second concavity is mounted with a closing member (100) which forms a horizontal surface near its junction with its end closing plate (4) and which closes the second cavity.

5. A train comprising a plurality of railroad vehicles (1) each having the vehicle body structure according to claim 4, wherein in each of the plurality of railroad vehicles of the train, the one of the first underfloor closing plate (5) and the second underfloor closing plate (6) that is farther from the railroad vehicle positioned at an end of the train is mounted with the closing member (100).

6. A method of structurally changing a train comprising a plurality of railroad vehicles (1) each having a vehicle body structure according to claim 4, comprising removing the closing member (100) from the one of the first underfloor closing plate (5) and the second underfloor closing plate (6) that is mounted with the closing member when as a result of a compositional change of the train, the one of the first underfloor closing plate and the second underfloor closing plate that is mounted with the closing member comes nearer, than another of the first underfloor closing plate and the second underfloor closing plate that is free of the closing member, to the railroad vehicle that is positioned at an end of the train after the compositional change.

## Patentansprüche

1. Fahrzeugwagenkastenstruktur für ein Schienenfahrzeug (1), wobei die Fahrzeugwagenkastenstruktur eine erste Endabschlussplatte (3), die in Fahrtrichtung vor einem Drehgestell (2) bereitgestellt ist, eine zweite Endabschlussplatte (4), die in Fahrtrichtung hinter dem Drehgestell bereitgestellt ist, eine erste Unterbodenabschlussplatte (5), die sich von einer unteren Kante der ersten Endabschlussplatte in Fahrtrichtung horizontal nach vorne erstreckt, und eine zweite Unterbodenabschlussplatte (6) umfasst, die sich von einer unteren Kante der zweiten Endabschlussplatte horizontal gegen die Fahrtrichtung erstreckt,
wobei eine aus der ersten Unterbodenabschlussplatte (5) und der zweiten Unterbodenabschlussplatte (6) an ihrem Übergang mit ihrer entsprechenden Endabschlussplatte mit einem nach unten gerichteten Vorsprung (51), der sich in Breitenrichtung des Fahrzeugs (1) erstreckt, und auf der entgegengesetzten Seite des nach unten gerichteten Vorsprungs in Richtung der Endabschlussplatte mit einer nach oben gerichteten Höhlung (52) bereitgestellt ist, die sich ebenfalls in Breitenrichtung des Fahrzeugs erstreckt, wobei die Höhlung Fahrtwind (W) außerhalb des Fahrzeugs ausgesetzt ist;
wobei die eine aus der ersten Unterbodenabschlussplatte (5) und der zweiten Unterbodenabschlussplatte (6) eine erste abgeschrägte Fläche (50; 50a, 50b) und eine zweite abgeschrägte Fläche (53) umfasst, die die Höhlung (52) ausbilden;
wobei die zweite abgeschrägte Fläche (53) und ein abgeschrägter Teil (3a) an einem unteren Ende der entsprechenden Endabschlussplatte (3) den Vorsprung (51) ausbilden; und
wobei die andere aus der ersten Unterbodenabschlussplatte (5) und der zweiten Unterbodenabschlussplatte (6) keinen entsprechenden Vorsprung und keine entsprechende Höhlung aufweist, die Fahrtwind (W) außerhalb des Fahrzeugs ausgesetzt ist.

2. Fahrzeugwagenkastenstruktur nach Anspruch 1, wobei die Höhe der Höhlung (52) entlang der Breite des Schienenfahrzeugs variiert.

3. Zug, der eine Vielzahl von Schienenfahrzeugen (1) umfasst, die jeweils eine Fahrzeugwagenkastenstruktur nach Anspruch 1 oder 2 aufweisen, wobei bei jedem aus der Vielzahl von Schienenfahrzeugen die eine aus der ersten Unterbodenabschlussplatte (5) und der zweiten Unterbodenabschlussplatte (6), die sich näher zu dem Schienenfahrzeug befindet, das an einem Ende des Zugs positioniert ist, mit der Höhlung (52) und dem Vorsprung (51) bereitgestellt ist, während die andere aus der ersten Unterbodenabschlussplatte und der zweiten Unterbodenabschlussplatte, die sich weiter von dem Schienenfahrzeug weg befindet, das an dem Ende des Zugs positioniert ist, keine Höhlung und keinen Vorsprung aufweist.

4. Fahrzeugwagenkastenstruktur nach Anspruch 1 oder 2, wobei:
die andere aus der ersten Unterbodenabschlussplatte (5) und der zweiten Unterbodenabschlussplatte (6) an ihrem Übergang mit ihrer Endabschlussplatte (4) mit einem zweiten nach unten gerichteten Vorsprung (51), der sich in Breitenrichtung des Fahrzeugs erstreckt, und an der entgegengesetzten Seite des nach unten gerichteten Vorsprungs in Richtung der Endabschlussplatte mit einer zweiten nach oben gerichteten Höhlung bereitgestellt ist, die sich ebenfalls in Breitenrichtung des Fahrzeugs erstreckt;
die andere aus der ersten Unterbodenabschlussplatte (5) und der zweiten Unterbodenabschlussplatte (6) eine erste abgeschrägte Fläche (50) und eine zweite abgeschrägte Fläche umfasst, die die zweite Höhlung ausbilden;
die zweite abgeschrägte Fläche der anderen aus der ersten Unterbodenabschlussplatte (5) und der zweiten Unterbodenabschlussplatte (6) und ein abgeschrägter Teil an einem unteren Ende der entsprechenden Endabschlussplatte (4) den zweiten Vorsprung (51) ausbilden; und
die zweite Höhlung mit einem Abschlusselement (100) befestigt ist, das eine horizontale Fläche in der Nähe seines Übergangs mit seiner Endabschlussplatte (4) ausbildet und die zweite Höhlung abschließt.

5. Zug, der eine Vielzahl von Schienenfahrzeugen (1) umfasst, die jeweils eine Fahrzeugwagenkastenstruktur nach Anspruch 4 aufweisen, wobei bei jedem der Vielzahl von Schienenfahrzeugen in dem Zug die eine aus der ersten Unterbodenabschlussplatte (5) und der zweiten Unterbodenabschlussplatte (6), die sich weiter weg von dem Schienenfahrzeug befindet, das an einem Ende des Zugs positioniert ist, mit dem Abschlusselement (100) befestigt ist.

6. Verfahren zur Strukturänderung eines Zugs, der eine Vielzahl von Schienenfahrzeugen (1) umfasst, die jeweils eine Fahrzeugwagenkastenstruktur nach Anspruch 4 aufweisen, das das Entfernen des Abschlusselements (100) von der einen aus der ersten Unterbodenabschlussplatte (5) und der zweiten Unterbodenabschlussplatte (6), die mit dem Abschlusselement befestigt ist, umfasst, wenn die eine aus der ersten Unterbodenabschlussplatte und der zweiten Unterbodenabschlussplatte, die mit dem Abschlusselement befestigt ist, aufgrund einer Aufbauänderung des Zugs nach der Aufbauänderung näher als eine andere aus der ersten Unterbodenabschlussplatte und der zweiten Unterbodenabschlussplatte, die das Abschlusselement nicht aufweist, zu dem Schienenfahrzeug kommt, das an einem Ende des Zugs positioniert ist.

## Revendications

1. Structure de caisse de véhicule pour un véhicule ferroviaire (1), la structure de caisse de véhicule comprenant une première plaque de fermeture d'extrémité (3) disposée devant un bogie (2) dans une direction de déplacement, une seconde plaque de fermeture d'extrémité (4) disposée derrière le bogie dans la direction de déplacement, une première plaque de fermeture de plancher (5) s'étendant horizontalement vers l'avant dans la direction de déplacement à partir d'un bord inférieur de la première plaque de fermeture d'extrémité, et une seconde plaque de fermeture de plancher (6) s'étendant horizontalement à l'opposé de la direction de déplacement à partir d'un bord inférieur de la seconde plaque de fermeture d'extrémité,
dans lequel une certaine de la première plaque de fermeture de plancher (5) et de la seconde plaque de fermeture de plancher (6) est munie, à sa jonction avec sa plaque de fermeture d'extrémité correspondante, d'une saillie dirigée vers le bas (51) s'étendant dans une direction de largeur du véhicule (1), et sur le côté de la saillie dirigée vers le bas opposé à la plaque de fermeture d'extrémité, d'une concavité dirigée vers le haut (52) s'étendant également dans la direction de largeur du véhicule, la cavité étant exposée à un écoulement d'air de véhicule externe (W) ;
dans laquelle ladite certaine de la première plaque de fermeture de plancher (5) et la seconde plaque de fermeture de plancher (6) comprend une première surface inclinée (50 ; 50a, 50b) et une seconde surface inclinée (53) qui forment la concavité (52) ;
dans laquelle la seconde surface inclinée (53) et une partie inclinée (3a) à une extrémité inférieure de la plaque de fermeture d'extrémité respective (3) forment la saillie (51) ; et
dans laquelle l'autre de la première plaque de fermeture de plancher (5) et de la seconde plaque de fermeture de plancher (6) est exempte d'une saillie correspondante et d'une cavité correspondante exposée à un écoulement d'air de véhicule externe (W).

2. Structure de caisse de véhicule selon la revendication 1, dans laquelle la hauteur de la concavité (52) varie le long d'une largeur du véhicule ferroviaire.

3. Train comprenant une pluralité de véhicules ferroviaires (1) ayant chacun une structure de caisse de véhicule selon la revendication 1 ou 2, dans lequel dans chacun de la pluralité de véhicules ferroviaires, la certaine de la première plaque de fermeture de plancher (5) et de la seconde plaque de fermeture de plancher (6) qui est plus proche du véhicule ferroviaire positionné à une extrémité du train est pourvue de la concavité (52) et de la saillie (51), tandis que l'autre de la première plaque de fermeture de plancher et de la seconde plaque de fermeture de plancher qui est plus loin du véhicule ferroviaire positionné à l'extrémité du train est exempte de la concavité et de la saillie.

4. Structure de caisse de véhicule selon la revendication 1 ou 2, dans laquelle
l'autre de la première plaque de fermeture de plancher (5) et de la seconde plaque de fermeture de plancher (6) est munie, à sa jonction avec sa plaque de fermeture d'extrémité (4), d'une seconde saillie dirigée vers le bas (51) s'étendant dans une direction de largeur du véhicule, et sur le côté de la saillie dirigée vers le bas opposé à la plaque de fermeture d'extrémité, d'une seconde concavité dirigée vers le haut s'étendant également dans la direction de largeur du véhicule ;
ladite autre de la première plaque de fermeture de plancher (5) et de la seconde plaque de fermeture de plancher (6) comprend une première surface inclinée (50) et une seconde surface inclinée qui forment la seconde concavité ;
la seconde surface inclinée de ladite autre de la première plaque de fermeture de plancher (5) et de la seconde plaque de fermeture de plancher (6) et une partie inclinée à une extrémité inférieure de la plaque de fermeture d'extrémité respective (4) forment la seconde saillie (51) ; et
la seconde concavité est montée avec un élément de fermeture (100) qui forme une surface horizontale à proximité de sa jonction avec sa plaque de fermeture d'extrémité (4) et qui ferme la seconde cavité.

5. Train comprenant une pluralité de véhicules ferroviaires (1) ayant chacun la structure de caisse de véhicule selon la revendication 4, dans lequel dans chacun de la pluralité de véhicules ferroviaires du train, la certaine de la première plaque de fermeture de plancher (5) et de la seconde plaque de fermeture de plancher (6) qui est plus éloignée du véhicule ferroviaire positionné à une extrémité du train est montée avec l'élément de fermeture (100).

6. Procédé de changement structurel d'un train comprenant une pluralité de véhicules ferroviaires (1) ayant chacun une structure de caisse de véhicule selon la revendication 4, comprenant le retrait de l'élément de fermeture (100) de la certaine de la première plaque de fermeture de plancher (5) et de la seconde plaque de fermeture de plancher (6) qui est montée avec l'élément de fermeture lorsqu'à la suite d'un changement de composition du train, la certaine de la première plaque de fermeture de plancher et de la seconde plaque de fermeture de plancher qui est montée avec l'élément de fermeture vient plus près, par rapport à une autre de la première plaque de fermeture de plancher et de la seconde plaque de fermeture de plancher qui est exempte de l'élément de fermeture, du véhicule ferroviaire qui est positionné à une extrémité du train après le changement de composition.
